# EUROPEAN PATENT APPLICATION

(11) **EP 3 817 256 A1**
(43) Date of publication of application: **05.05.2021**
(21) Application number: 19827472.2
(22) Date of filing: 15.05.2019
(51) Int. Cl.: H04L 1/00

(54) **MEASUREMENT METHOD AND CONFIGURATION METHOD FOR BANDWIDTH PART, TERMINAL, AND NETWORK DEVICE**

(30) Priority: 29.06.2018 CN 201810699560
(71) Applicant: Datang Mobile Communications Equipment Co., Ltd., Beijing 100083 (CN)
(72) Inventor: ZHAO, Li, Beijing 100191 (CN); PENG, Ying, Beijing 100191 (CN); ZHAO, Rui, Beijing 100191 (CN)
(74) Representative: Studio Torta S.p.A.
(86) International application number: PCT/CN2019/086989
(87) International publication number: WO 2020/001187

(57) **Abstract**

The present application discloses a bandwidth part measurement method, a bandwidth part configuration method, a terminal and a network device. The bandwidth part measurement method includes: measuring at least one configured BWP to obtain a measurement result; transmitting the measurement result to a network device.

## Description

### CROSS-REFERENCE TO RELATED APPLICATION

This application claims the benefit and priority of Chinese Application No. 201810699560.9, filed on June 29, 2018, which is incorporated herein by reference in its entirety.

### TECHNICAL FIELD

The present disclosure relates to the field of communications technology, and in particular to a bandwidth part measurement method, a bandwidth part configuration method, a terminal and a network device.

### BACKGROUND

The bandwidth part (BWP) is a contiguous set of resource blocks configured according to a given numerology set (including subcarrier spacing (SCS) and cyclic prefix (CP) configuration).

The 5G new radio (NR) in the related art stipulates that up to 4 BWPs can be configured for uplink and downlink. Only one BWP can be activated by radio resource control (RRC) signaling or MAC Control Element (MAC CE), and then transmission is performed by a terminal or User Equipment (UE) on the activated BWP according to service characteristics.

In the 5G NR, the UE performs transmission on the BWP configured to be activated. If the UE supports multiple services, one activated BWP may not be able to meet transmission requirements of multiple services.

Further, if the UE performs transmission on the activated BWP, transmission quality and transmission status on the BWP cannot be effectively monitored because there is no BWP measurement mechanism.

### SUMMARY

Embodiments of the present disclosure provide a bandwidth part measurement method, a bandwidth part configuration method, a terminal and a network device, which can measure BWP and effectively monitor transmission quality and transmission status on the BWP.

In order to solve the above technical problems, the embodiments of the present disclosure provide the following technical solutions.

A bandwidth part measurement method, performed by a terminal, including:
measuring at least one configured BWP to obtain a measurement result;
transmitting the measurement result to a network device.
The measuring at least one configured BWP, includes at least one of the following:
measuring an occupation ratio of sub-channels of the at least one BWP;
measuring phase noise of the at least one BWP;
measuring Doppler effect influence of the at least one BWP;
measuring a received signal strength indication (RSSI) of the at least one BWP;
measuring a packet loss rate of the at least one BWP;
measuring a decoding success rate of the at least one BWP.

The measuring an occupation ratio of sub-channels of the at least one BWP, includes: measuring an energy of a sub-channel occupied by a received packet/a transmitted packet in the at least one BWP, to obtain the occupation ratio of the sub-channels of the at least one BWP in a measurement period.

The measuring phase noise of the at least one BWP, includes: if a subcarrier spacing of the at least one BWP is greater than a preset value, measuring the phase noise of the at least one BWP with a phase tracking reference signal.

The measuring Doppler effect influence of the at least one BWP, includes: measuring a frequency offset and/or a timing offset of the at least one BWP to obtain a measurement result.

The measuring a received signal strength indication (RSSI) of the at least one BWP, includes: measuring RSSI of a sub-channel in the at least one BWP.

The measuring a packet loss rate of the at least one BWP, includes: counting a packet loss rate of data packets transmitted in the at least one BWP.

The measuring a decoding success rate of the at least one BWP, includes: counting a decoding success rate of received data of the at least one BWP.

The transmitting the measurement result to a network device, includes: reporting the measurement result to a base station in a periodic or aperiodic manner, wherein the aperiodic manner includes at least one of an event triggering mode or a signaling reporting mode.

The configured at least one BWP includes at least one activated BWP.

One embodiment of the present disclosure further provides a bandwidth part configuration method, performed by a network device, including:
receiving a measurement result of measuring at least one configured BWP, transmitted by a terminal;
reconfiguring BWP supported by the terminal according to the measurement result.

The measurement result includes at least one of the following:
a measurement result of measuring an occupation ratio of sub-channels of the at least one BWP;
a measurement result of measuring phase noise of the at least one BWP;
a measurement result of measuring Doppler effect influence of the at least one BWP;
a measurement result of measuring a received signal strength indication (RSSI) of the at least one BWP;
a measurement result of measuring a packet loss rate of the at least one BWP;
a measurement result of measuring a decoding success rate of the at least one BWP.

One embodiment of the present disclosure further provides a terminal, including:
a processor configured for measuring at least one configured BWP to obtain a measurement result;
a transceiver configured for transmitting the measurement result to a network device.

The measuring at least one configured BWP, includes at least one of the following:
measuring an occupation ratio of sub-channels of the at least one BWP;
measuring phase noise of the at least one BWP;
measuring Doppler effect influence of the at least one BWP;
measuring a received signal strength indication (RSSI) of the at least one BWP;
measuring a packet loss rate of the at least one BWP;
measuring a decoding success rate of the at least one BWP.

The measuring an occupation ratio of sub-channels of the at least one BWP, includes: measuring an energy of a sub-channel occupied by a received packet/a transmitted packet in the at least one BWP, to obtain the occupation ratio of the sub-channels of the at least one BWP in a measurement period.

The measuring phase noise of the at least one BWP, includes: if a subcarrier spacing of the at least one BWP is greater than a preset value, measuring the phase noise of the at least one BWP with a phase tracking reference signal.

The measuring Doppler effect influence of the at least one BWP, includes: measuring a frequency offset and/or a timing offset of the at least one BWP to obtain a measurement result.

The measuring a received signal strength indication (RSSI) of the at least one BWP, includes: measuring RSSI of a sub-channel in the at least one BWP.

The measuring a packet loss rate of the at least one BWP, includes: counting a packet loss rate of data packets transmitted in the at least one BWP.

The measuring a decoding success rate of the at least one BWP, includes: counting a decoding success rate of received data of the at least one BWP.

The transceiver is further configured to report the measurement result to a base station in a periodic or aperiodic manner, wherein the aperiodic manner includes at least one of an event triggering mode or a signaling reporting mode.

The configured at least one BWP includes at least one activated BWP.

One embodiment of the present disclosure further provides a bandwidth part measurement device, including:
a processing module configured to measure at least one configured BWP to obtain a measurement result;
a transceiver module configured to transmit the measurement result to a network device.

One embodiment of the present disclosure further provides a network device, including:
a transceiver configured to receive a measurement result of measuring at least one configured BWP, transmitted by a terminal;
a processor configured to reconfigure BWP supported by the terminal according to the measurement result.

One embodiment of the present disclosure further provides a bandwidth part configuration device, including:
a transceiver module configured to receive a measurement result of measuring at least one configured BWP, transmitted by a terminal;
a processing module configured to reconfigure BWP supported by the terminal according to the measurement result.

One embodiment of the present disclosure further provides a communication device, including: a processor configured to execute the foregoing method.

One embodiment of the present disclosure further provides a computer storage medium including instructions; wherein when the instructions are executed on a computer, the computer is caused to execute the foregoing method.

The beneficial effects of the embodiments of the present disclosure are as follows.

In the foregoing embodiments of the present disclosure, by measuring the BWP and transmitting the measurement result to the network device, transmission quality and transmission status on the BWP can be effectively monitored. Further, BWP reconfiguration is performed by a base station according to the measurement result, which more effectively improves a resource utilization rate and meets service transmission requirements.

### BRIEF DESCRIPTION OF THE DRAWINGS

FIG. 1 is a schematic flowchart of a bandwidth part measurement method according to an embodiment of the present disclosure;
FIG. 2 is a schematic structural diagram of a terminal according to an embodiment of the present disclosure;
FIG. 3 is a schematic block diagram of a bandwidth part measurement device according to an embodiment of the present disclosure;
FIG. 4 is a schematic flowchart of a bandwidth part configuration method according to an embodiment of the present disclosure.

### DETAILED DESCRIPTION

Exemplary embodiments of the present disclosure will be described hereinafter in details with reference to the accompanying drawings. Although the accompanying drawings show exemplary embodiments of the present disclosure, it should be understood that the present disclosure may be implemented in various forms and should not be limited by the embodiments described herein. On the contrary, these embodiments are provided to enable a more thorough understanding of the present disclosure and to fully convey the scope of the present disclosure to those skilled in the art.

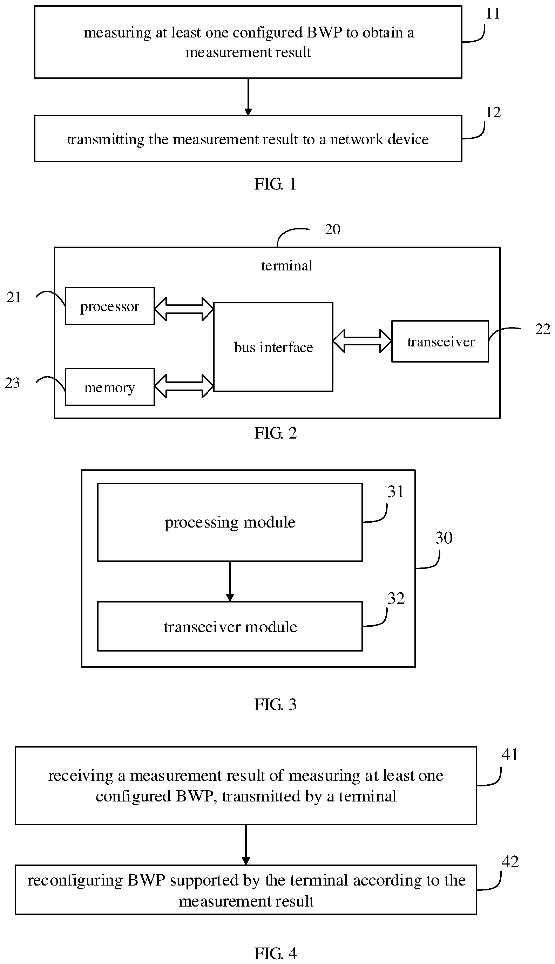

As shown in FIG. 1, one embodiment of the present disclosure provides a bandwidth part measurement method, performed by a terminal. The terminal here may be a terminal in a V2X scenario in the 5G NR system. The measurement method includes:

Step 11: measuring at least one configured BWP to obtain a measurement result;

Step 12: transmitting the measurement result to a network device.

In this embodiment of the present disclosure, by measuring the configured BWP and transmitting the measurement result to the network device, transmission quality and transmission status on the BWP can be effectively monitored. Further, BWP reconfiguration is performed by a base station according to the measurement result, which more effectively improves a resource utilization rate and meets service transmission requirements.

In a specific embodiment of the present disclosure, in the foregoing step 11, measuring at least one BWP may include at least one of the following: 1) measuring an occupation ratio of sub-channels of the at least one BWP; 2) measuring phase noise of the at least one BWP; 3) measuring Doppler effect influence of the at least one BWP; 4) measuring a received signal strength indication (RSSI) of the at least one BWP; 5) measuring a packet loss rate of the at least one BWP; 6) measuring a decoding success rate of the at least one BWP.

That is to say, when measuring BWP, it can be one or more of the above 6 measurement modes.

In the foregoing measurement mode 1), measuring an occupation ratio of sub-channels of the at least one BWP, includes: measuring an energy of a sub-channel occupied by a received packet/a transmitted packet in the at least one BWP, to obtain the occupation ratio of the sub-channels of the at least one BWP in a measurement period.

The measuring an energy of a sub-channel occupied by a received packet in the at least one BWP, to obtain the occupation ratio of the sub-channels of the at least one BWP in a measurement period, specifically includes:
measuring an energy of a receiving sub-channel occupied by a received packet in the at least one BWP; if the energy of the receiving sub-channel is greater than a first preset value, determining that the receiving sub-channel is in an occupied status, and obtaining an occupation ratio of receiving sub-channels of the at least one BWP in the measurement period.

In this measurement mode, the terminal serves as a receiving end and reuses a channel busy rate (CBR) (i.e., channel occupancy ratio) measurement mechanism for the channel occupancy status in the BWP, with a measured time-frequency resources being changed from resource pools to the BWP. The measurement period may be 100ms or adjusted according to configuration of the BWP. If a measured energy of one sub-channel exceeds a pre-configured threshold (such as the foregoing first preset value), the one sub-channel is considered to be in an occupied status. In the measurement period, the occupancy ratio of sub-channels in the BWP is counted and a CBR measurement result is reported to the base station. When the base station receives the CBR measurement result, the base station can perform BWP reconfiguration according to resource load condition.

In the foregoing measurement mode 1), the measuring an energy of a sub-channel occupied by a transmitted packet in the at least one BWP, to obtain the occupation ratio of the sub-channels of the at least one BWP in a measurement period, includes:
measuring an energy of a transmission sub-channel occupied by a transmitted packet in the at least one BWP; if the energy of the transmission sub-channel is greater than a second preset value, determining that the transmission sub-channel is in an occupied status, and obtaining an occupation ratio of transmission sub-channels of the at least one BWP in the measurement period.

In this measurement mode, the terminal serves as a transmission end and reuses a channel busy rate (CR) (i.e., channel occupancy ratio) measurement mechanism for the occupancy status of sub-channels occupied by each transmitted packet in the BWP with a measured time-frequency resources being changed from resource pools to the BWP. The measurement period may be 100ms or adjusted according to configuration of the BWP. In the measurement period, the occupancy ratio of transmission sub-channels in the BWP is counted and a CR measurement result is reported to the base station in a periodic or aperiodic (event trigger, etc.) manner. When the base station receives the CR measurement result, the base station can perform BWP reconfiguration according to resource load condition.

In the foregoing measurement mode 2), measuring phase noise of the at least one BWP, may specifically include: if a subcarrier spacing of the at least one BWP is greater than a preset value, measuring the phase noise of the at least one BWP with a phase tracking reference signal.

In this measurement mode, the BWP may be configured in a high-frequency band, such as a millimeter wave. Especially in the high-frequency band, phase noise may spread some of an oscillator's power to adjacent frequencies, which results in sidebands. Thus, when the BWP is configured in the high frequency band, phase noise measurement is performed on the configured BWP with the phase tracking reference signal. The phase noise measured on the BWP is reported to the base station in a periodic or aperiodic (event triggered, etc.) manner. When the base station receives a phase noise measurement result of the BWP, the base station can perform BWP reconfiguration according to influence of the phase noise.

In the foregoing measurement mode 3), the measuring Doppler effect influence of the at least one BWP, includes: measuring a frequency offset and/or a timing offset of the at least one BWP to obtain a measurement result.

In this measurement mode, the BWP may be configured in a high-frequency band. Since a vehicle may move at a high speed, influence of the Doppler effect may be reflected by measuring the frequency offset and timing offset. The frequency offset and/or timing offset of the configured BWP is measured, and the measurement result is reported to the base station in a periodic or aperiodic (event triggered, etc.) manner. When the base station receives the measurement result of frequency deviation and/or timing deviation of the BWP, the base station can perform BWP reconfiguration according to influence of the measurement result of frequency deviation or timing deviation.

In the foregoing measurement mode 4), the measuring a received signal strength indication (RSSI) of the at least one BWP, includes: measuring RSSI of a sub-channel in the at least one BWP.

In this measurement mode, RSSI of each sub-channel in the configured BWP may be measured. The RSSI of each sub-channel in the configured BWP is measured, and a measurement result of high RSSI is reported to the base station in a periodic or aperiodic (event trigger, etc.) manner. When the base station receives the measurement result of the RSSI of the sub-channel in the configured BWP, the base station can perform BWP reconfiguration according to the measurement result of the RSSI.

In the foregoing measurement mode 5), the measuring a packet loss rate of the at least one BWP, may include: counting a packet loss rate of data packets transmitted in the at least one BWP.

In this measurement mode, the terminal may be configured to, when transmitting packets in the BWP, count a packet loss caused by resource limitations or transmission restrictions, and record related packet loss reasons. A sender packet loss result of the terminal is reported to the base station in a periodic or aperiodic (event triggered, etc.) manner. When the base station receives the sender packet loss result of the terminal on the configured BWP, the base station can perform BWP reconfiguration according to statistics of packet loss of packets transmitted by different terminals on the BWP.

In the foregoing measurement mode 6), the measuring a decoding success rate of the at least one BWP, may include: counting a decoding success rate of received data of the at least one BWP.

In this measurement mode, the terminal may be configured to count successful reception in the BWP, and a receiver successful reception of the terminal may be reported to the base station in a periodic or aperiodic (event-triggered, etc.) manner. When the base station receives the receiver successful reception of the terminal on the configured BWP, the base station can perform BWP reconfiguration according to statistics of packet loss (i.e., the number of successful receptions is too low) of different terminals on the BWP.

In the foregoing embodiment of the present disclosure, the transmitting the measurement result to a network device, may include: reporting the measurement result to a base station in a periodic or aperiodic manner, where the aperiodic manner includes at least one of an event triggering mode or a signaling reporting mode. The event triggering mode here may be, for example, an event reported by a terminal; and the signaling triggering mode here may be, for example, radio resource control (RRC) signaling.

In the foregoing embodiments of the present disclosure, the configured at least one BWP may include at least one activated BWP. If the terminal supports multiple services with different requirements, it is necessary to support activation of multiple BWPs among multiple configured BWPs according to the requirements of multiple services. The service requirements here include delay, reliability, bandwidth, and node movement speed, etc. When multiple BWPs are configured for the terminal, if the terminal supports one or more activated BWPs, the terminal may measure the activated BWP and reports a measurement result of the BWP to the base station in a periodic or aperiodic (event triggered, etc.) manner, so that the base station can perform BWP reconfiguration according to the measurement result, thereby meeting actual needs of the terminal supporting multiple service requirements.

In the foregoing embodiments of the present disclosure, multiple measurement methods are provided, and the measurement result is reported to the base station, so that the base station can perform BWP reconfiguration according to the measurement result, thereby effectively improving resource utilization and meeting service transmission requirements.

As shown in FIG. 2, corresponding to the foregoing method embodiment, one embodiment of the present disclosure further provides a terminal 20 including:
a processor 21 configured to measure at least one configured BWP to obtain a measurement result;
a transceiver 22 configured to transmit the measurement result to a network device.

Measuring at least one BWP may include at least one of the following: 1) measuring an occupation ratio of sub-channels of the at least one BWP; 2) measuring phase noise of the at least one BWP; 3) measuring Doppler effect influence of the at least one BWP; 4) measuring a received signal strength indication (RSSI) of the at least one BWP; 5) measuring a packet loss rate of the at least one BWP; 6) measuring a decoding success rate of the at least one BWP.

The measuring an occupation ratio of sub-channels of the at least one BWP, includes: measuring an energy of a sub-channel occupied by a received packet/a transmitted packet in the at least one BWP, to obtain the occupation ratio of the sub-channels of the at least one BWP in a measurement period.

The measuring an energy of a sub-channel occupied by a received packet in the at least one BWP, to obtain the occupation ratio of the sub-channels of the at least one BWP in a measurement period, specifically includes: measuring an energy of a receiving sub-channel occupied by a received packet in the at least one BWP; if the energy of the receiving sub-channel is greater than a first preset value, determining that the receiving sub-channel is in an occupied status, and obtaining an occupation ratio of receiving sub-channels of the at least one BWP in the measurement period.

The measuring an energy of a sub-channel occupied by a transmitted packet in the at least one BWP, to obtain the occupation ratio of the sub-channels of the at least one BWP in a measurement period, includes: measuring an energy of a transmission sub-channel occupied by a transmitted packet in the at least one BWP; if the energy of the transmission sub-channel is greater than a second preset value, determining that the transmission sub-channel is in an occupied status, and obtaining an occupation ratio of transmission sub-channels of the at least one BWP in the measurement period.

The measuring phase noise of the at least one BWP, may specifically include: if a subcarrier spacing of the at least one BWP is greater than a preset value, measuring the phase noise of the at least one BWP with a phase tracking reference signal.

The measuring Doppler effect influence of the at least one BWP, includes: measuring a frequency offset and/or a timing offset of the at least one BWP to obtain a measurement result.

The measuring a received signal strength indication (RSSI) of the at least one BWP, includes: measuring RSSI of a sub-channel in the at least one BWP.

The measuring a packet loss rate of the at least one BWP, may include: counting a packet loss rate of data packets transmitted in the at least one BWP.

The measuring a decoding success rate of the at least one BWP, may include: counting a decoding success rate of received data of the at least one BWP.

The transceiver 22 is configured to report the measurement result to a network device in a periodic or aperiodic manner, where the aperiodic manner includes at least one of an event triggering mode or a signaling reporting mode.

The configured at least one BWP may include at least one activated BWP.

It should be noted that the terminal 20 may further include: a memory 23, which is communicatively connected with the foregoing processor 21 and the transceiver 22 through a bus interface and which is used to store information during the processing of the measurement result. Of course, the terminal may further include a communication interface such as a user interface. This embodiment is a terminal corresponding to the foregoing method embodiment, and all implementation manners of the foregoing method embodiment are applicable to this embodiment, and the same technical effect can also be achieved.

As shown in FIG. 3, one embodiment of the present disclosure further provides a bandwidth part measurement device 30, including:
a processing module 31, configured to measure at least one configured BWP to obtain a measurement result;
a transceiver module 32 configured to transmit the measurement result to a network device.

Measuring at least one BWP may include at least one of the following: measuring an occupation ratio of sub-channels of the at least one BWP; measuring phase noise of the at least one BWP; measuring Doppler effect influence of the at least one BWP; measuring a received signal strength indication (RSSI) of the at least one BWP; measuring a packet loss rate of the at least one BWP; measuring a decoding success rate of the at least one BWP.

The measuring an occupation ratio of sub-channels of the at least one BWP, includes: measuring an energy of a sub-channel occupied by a received packet/a transmitted packet in the at least one BWP, to obtain the occupation ratio of the sub-channels of the at least one BWP in a measurement period.

The measuring an energy of a sub-channel occupied by a received packet in the at least one BWP, to obtain the occupation ratio of the sub-channels of the at least one BWP in a measurement period, specifically includes: measuring an energy of a receiving sub-channel occupied by a received packet in the at least one BWP; if the energy of the receiving sub-channel is greater than a first preset value, determining that the receiving sub-channel is in an occupied status, and obtaining an occupation ratio of receiving sub-channels of the at least one BWP in the measurement period.

The measuring an energy of a sub-channel occupied by a transmitted packet in the at least one BWP, to obtain the occupation ratio of the sub-channels of the at least one BWP in a measurement period, includes: measuring an energy of a transmission sub-channel occupied by a transmitted packet in the at least one BWP; if the energy of the transmission sub-channel is greater than a second preset value, determining that the transmission sub-channel is in an occupied status, and obtaining an occupation ratio of transmission sub-channels of the at least one BWP in the measurement period.

The measuring phase noise of the at least one BWP, may specifically include: if a subcarrier spacing of the at least one BWP is greater than a preset value, measuring the phase noise of the at least one BWP with a phase tracking reference signal.

The measuring Doppler effect influence of the at least one BWP, includes: measuring a frequency offset and/or a timing offset of the at least one BWP to obtain a measurement result.

The measuring a received signal strength indication (RSSI) of the at least one BWP, includes: measuring RSSI of a sub-channel in the at least one BWP.

The measuring a packet loss rate of the at least one BWP, may include: counting a packet loss rate of data packets transmitted in the at least one BWP.

The measuring a decoding success rate of the at least one BWP, may include: counting a decoding success rate of received data of the at least one BWP.

The transceiver module is specifically configured to report the measurement result to a network device in a periodic or aperiodic manner, where the aperiodic manner includes at least one of an event triggering mode or a signaling reporting mode.

The configured at least one BWP may include at least one activated BWP.

It should be noted that this embodiment is a device corresponding to the foregoing method embodiment, and all implementation manners of the foregoing method embodiment are applicable to this embodiment, and the same technical effect can also be achieved.

Corresponding to the foregoing method, as shown in FIG. 4, one embodiment of the present disclosure further provides a bandwidth part configuration method performed by a network device. The configuration method includes:
Step 41: receiving a measurement result of measuring at least one configured BWP, transmitted by a terminal;
Step 42: reconfiguring BWP supported by the terminal according to the measurement result.

The measurement result includes at least one of the following: a measurement result of measuring an occupation ratio of sub-channels of the at least one BWP; a measurement result of measuring phase noise of the at least one BWP; a measurement result of measuring Doppler effect influence of the at least one BWP; a measurement result of measuring a received signal strength indication (RSSI) of the at least one BWP; a measurement result of measuring a packet loss rate of the at least one BWP; a measurement result of measuring a decoding success rate of the at least one BWP.

The measuring an occupation ratio of sub-channels of the at least one BWP, includes: measuring an energy of a sub-channel occupied by a received packet/a transmitted packet in the at least one BWP, to obtain the occupation ratio of the sub-channels of the at least one BWP in a measurement period.

The measuring an energy of a sub-channel occupied by a received packet in the at least one BWP, to obtain the occupation ratio of the sub-channels of the at least one BWP in a measurement period, specifically includes: measuring an energy of a receiving sub-channel occupied by a received packet in the at least one BWP; if the energy of the receiving sub-channel is greater than a first preset value, determining that the receiving sub-channel is in an occupied status, and obtaining an occupation ratio of receiving sub-channels of the at least one BWP in the measurement period.

The measuring an energy of a sub-channel occupied by a transmitted packet in the at least one BWP, to obtain the occupation ratio of the sub-channels of the at least one BWP in a measurement period, specifically includes: measuring an energy of a transmission sub-channel occupied by a transmitted packet in the at least one BWP; if the energy of the transmission sub-channel is greater than a second preset value, determining that the transmission sub-channel is in an occupied status, and obtaining an occupation ratio of transmission sub-channels of the at least one BWP in the measurement period.

The measuring phase noise of the at least one BWP, may specifically include: if a subcarrier spacing of the at least one BWP is greater than a preset value, measuring the phase noise of the at least one BWP with a phase tracking reference signal.

The measuring Doppler effect influence of the at least one BWP, includes: measuring a frequency offset and/or a timing offset of the at least one BWP to obtain a measurement result.

The measuring a received signal strength indication (RSSI) of the at least one BWP, includes: measuring RSSI of a sub-channel in the at least one BWP.

The measuring a packet loss rate of the at least one BWP, may include: counting a packet loss rate of data packets transmitted in the at least one BWP.

The measuring a decoding success rate of the at least one BWP, may include: counting a decoding success rate of received data of the at least one BWP.

The measurement result is reported to the network device in a periodic or aperiodic manner, where the aperiodic manner includes at least one of an event triggering mode or a signaling reporting mode.

The configured at least one BWP may include at least one activated BWP.

In this embodiment, the base station performs BWP reconfiguration according to the measurement result and a counting result, thereby effectively improving resource utilization and meeting service transmission requirements.

One embodiment of the present disclosure further provides a network device, including:
a transceiver configured to receive a measurement result of measuring at least one configured BWP, transmitted by a terminal;
a processor configured to reconfigure BWP supported by the terminal according to the measurement result.

It should be noted that this embodiment is a network device corresponding to the foregoing method embodiment shown in FIG. 4, and the network device here may be a network device including but not limited to a base station. All implementation manners of the foregoing method embodiment are applicable to this embodiment, and the same technical effect can also be achieved.

One embodiment of the present disclosure further provides a bandwidth part configuration device, including:
a transceiver module configured to receive a measurement result of measuring at least one configured BWP, transmitted by a terminal;
a processing module configured to reconfigure BWP supported by the terminal according to the measurement result.

It should be noted that this embodiment is a network device corresponding to the foregoing method embodiment shown in FIG. 4, and the network device here may be a device in a network device such as a base station. All implementation manners of the foregoing method embodiment are applicable to this embodiment, and the same technical effect can also be achieved.

One embodiment of the present disclosure further provides a communication device, including: a processor configured to execute the method as described in the foregoing embodiment.

One embodiment of the present disclosure further provides a computer storage medium including instructions. When the instructions are executed on a computer, the computer is caused to execute the method as described in the foregoing embodiment.

The person skilled in this field may be aware that the units and algorithmic steps of each embodiment described in the embodiments of the present disclosure can be realized by electronic hardware or a combination of the electronic hardware and computer software. Whether these functions are performed with hardware or software depends on the specific application and design constraints of the technical solution. Professionals may use different methods for each particular application to implement the described function, but such implementations should not be considered as beyond the scope of this disclosure.

The technical personnel in the field can clearly understand that, for the convenience and simplicity of description, the specific working process of the system, device and unit described above can refer to the corresponding process in the above method embodiment, and it will not be repeated here.

In the embodiments provided in the present application, it should be understood that the disclosed device and method may be realized by other modes. For example, the device embodiment described above is only illustrative, for example, the units are divided according to the logical function and can be divided in other modes in fact. For instance, multiple units or components can be combined with or can be integrated into another system, or some characteristics can be ignored, or are not executed. On the other hand, the coupling or direct coupling or communication connection shown or discussed among each other may be indirect coupling or communication connection through some interfaces, devices or units, which may be electrical, mechanical or in other forms.

The units described above as separation units may or may not be physically separated, and the components displayed as the units may or may not be the physical units. The units can be located in one place or distributed to multiple network units. Partial or all of these units may be selected according to actual requirements to realize the purpose of the solutions in embodiments of the present disclosure.

Further, each function unit in each embodiment of the present disclosure may be integrated into one processing unit, each unit may be set in a separate physical location, or two or more than two units may be integrated into one unit.

When the functions are implemented in the form of a software function unit and sold or used as a separate product, the software function unit may be stored in a computer readable storage medium. On the basis of such an understanding, the technical scheme of the preset disclosure in essence or those contributing to the existing technology in embodiments of the present disclosure can be embodied in the form of software products. The computer software product may be stored in a storage medium, which may include several instructions to enable a computer device (which can be a personal computer, server, or network device, etc.) to perform all or partial of the method in each embodiment of the present disclosure. The storage medium may be various kinds of medium that may store the program codes, such as the U disk, a mobile hard disk, Read-Only Memory (ROM), Random Access Memory (RAM), a diskette or a CD-ROM, etc.

In addition, it should be noted that, in the devices and methods in the present disclosure, it is evident that each component or each step can be decomposed and/or reassembled. These decomposition and/or recombination shall be considered equivalent schemes of this disclosure. Also, the steps to perform the processes described above can naturally be performed chronologically in the order described, but not necessarily chronologically. Some steps can be executed in parallel or independently. Those skilled in the art may understand that all or any step or component may be implemented via hardware, firmware, software or their combination in any computing device (including a processor, a storage medium, etc.) or computing devices in the network. This can be implemented by those skilled in the art with their basic programming skills after reading the instructions of the present disclosure.

Thus, the objective of the present disclosure may also be implemented by running a program or group of programs on any computing device. The computing device may be a well-known and common device. Thus, the objective of this disclosure may also be implemented only by providing a program product containing program codes that implements the methods or devices. That is, such a program product also constitutes the present disclosure, and the storage medium storing the program product also constitutes this disclosure. Obviously, the storage medium may be any well-known storage medium or any storage medium developed in the future. It should also be noted that in the devices and methods in the present disclosure, it is evident that each component or step can be decomposed and/or reassembled. These decomposition and/or recombination shall be considered as equivalent schemes of the present disclosure. Also, the steps to perform the processes described above can naturally be performed chronologically in the order described, but not necessarily chronologically. Some steps can be performed in parallel or independently.

The above are merely the preferred embodiments of the present disclosure. It should be noted that, a person skilled in the art may make improvements and modifications without departing from the principle of the present disclosure, and these improvements and modifications shall also fall within the scope of the present disclosure.

## Claims

1. A bandwidth part measurement method, performed by a terminal, comprising:
measuring at least one configured BWP to obtain a measurement result;
transmitting the measurement result to a network device.

2. The method according to claim 1, wherein the measuring at least one configured BWP, includes at least one of the following:
measuring an occupation ratio of sub-channels of the at least one BWP;
measuring phase noise of the at least one BWP;
measuring Doppler effect influence of the at least one BWP;
measuring a received signal strength indication (RSSI) of the at least one BWP;
measuring a packet loss rate of the at least one BWP;
measuring a decoding success rate of the at least one BWP.

3. The method according to claim 2, wherein the measuring an occupation ratio of sub-channels of the at least one BWP, includes:
measuring an energy of a sub-channel occupied by a received packet/a transmitted packet in the at least one BWP, to obtain the occupation ratio of the sub-channels of the at least one BWP in a measurement period.

4. The method according to claim 2, wherein the measuring phase noise of the at least one BWP, includes:
if a subcarrier spacing of the at least one BWP is greater than a preset value, measuring the phase noise of the at least one BWP with a phase tracking reference signal.

5. The method according to claim 2, wherein the measuring Doppler effect influence of the at least one BWP, includes:
measuring a frequency offset and/or a timing offset of the at least one BWP to obtain a measurement result.

6. The method according to claim 2, wherein the measuring a received signal strength indication (RSSI) of the at least one BWP, includes:
measuring RSSI of a sub-channel in the at least one BWP.

7. The method according to claim 2, wherein the measuring a packet loss rate of the at least one BWP, includes:
counting a packet loss rate of data packets transmitted in the at least one BWP.

8. The method according to claim 2, wherein the measuring a decoding success rate of the at least one BWP, includes:
counting a decoding success rate of received data of the at least one BWP.

9. The method according to claim 1, wherein the transmitting the measurement result to a network device, includes:
reporting the measurement result to a base station in a periodic or aperiodic manner, wherein the aperiodic manner includes at least one of an event triggering mode or a signaling reporting mode.

10. The method according to claim 1, wherein the configured at least one BWP includes at least one activated BWP.

11. A bandwidth part configuration method, performed by a network device, comprising:
receiving a measurement result of measuring at least one configured BWP, transmitted by a terminal;
reconfiguring BWP supported by the terminal according to the measurement result.

12. The method according to claim 11, wherein the measurement result includes at least one of the following:
a measurement result of measuring an occupation ratio of sub-channels of the at least one BWP;
a measurement result of measuring phase noise of the at least one BWP;
a measurement result of measuring Doppler effect influence of the at least one BWP;
a measurement result of measuring a received signal strength indication (RSSI) of the at least one BWP;
a measurement result of measuring a packet loss rate of the at least one BWP;
a measurement result of measuring a decoding success rate of the at least one BWP.

13. A terminal, comprising:
a processor configured for measuring at least one configured BWP to obtain a measurement result;
a transceiver configured for transmitting the measurement result to a network device.

14. The terminal according to claim 13, wherein the measuring at least one configured BWP, includes at least one of the following:
measuring an occupation ratio of sub-channels of the at least one BWP;
measuring phase noise of the at least one BWP;
measuring Doppler effect influence of the at least one BWP;
measuring a received signal strength indication (RSSI) of the at least one BWP;
measuring a packet loss rate of the at least one BWP;
measuring a decoding success rate of the at least one BWP.

15. The terminal according to claim 14, wherein the measuring an occupation ratio of sub-channels of the at least one BWP, includes:
measuring an energy of a sub-channel occupied by a received packet/a transmitted packet in the at least one BWP, to obtain the occupation ratio of the sub-channels of the at least one BWP in a measurement period.

16. The terminal according to claim 14, wherein the measuring phase noise of the at least one BWP, includes:
if a subcarrier spacing of the at least one BWP is greater than a preset value, measuring the phase noise of the at least one BWP with a phase tracking reference signal.

17. The terminal according to claim 14, wherein the measuring Doppler effect influence of the at least one BWP, includes:
measuring a frequency offset and/or a timing offset of the at least one BWP to obtain a measurement result.

18. The terminal according to claim 14, wherein the measuring a received signal strength indication (RSSI) of the at least one BWP, includes:
measuring RSSI of a sub-channel in the at least one BWP.

19. The terminal according to claim 14, wherein the measuring a packet loss rate of the at least one BWP, includes:
counting a packet loss rate of data packets transmitted in the at least one BWP.

20. The terminal according to claim 14, wherein the measuring a decoding success rate of the at least one BWP, includes:
counting a decoding success rate of received data of the at least one BWP.

21. The terminal according to claim 13, wherein the transceiver is further configured to,
report the measurement result to a base station in a periodic or aperiodic manner, wherein the aperiodic manner includes at least one of an event triggering mode or a signaling reporting mode.

22. The terminal according to claim 13, wherein the configured at least one BWP includes at least one activated BWP.

23. A bandwidth part measurement device, comprising:
a processing module configured to measure at least one configured BWP to obtain a measurement result;
a transceiver module configured to transmit the measurement result to a network device.

24. A network device, comprising:
a transceiver configured to receive a measurement result of measuring at least one configured BWP, transmitted by a terminal;
a processor configured to reconfigure BWP supported by the terminal according to the measurement result.

25. A bandwidth part configuration device, comprising:
a transceiver module configured to receive a measurement result of measuring at least one configured BWP, transmitted by a terminal;
a processing module configured to reconfigure BWP supported by the terminal according to the measurement result.

26. A communication device, comprising: a processor configured to execute the method according to any one of claims 1 to 10, or the method according to any one of claims 11 to 12.

27. A computer storage medium comprising instructions; wherein when the instructions are executed on a computer, the computer is caused to execute the method according to any one of claims 1 to 10, or the method according to any one of claims 11 to 12.
